# FASCICULE DE BREVET EUROPEEN

(11) **EP 3 339 782 B1**
(45) Date de publication et mention de la délivrance du brevet: **30.10.2019**
(21) Numéro de dépôt: 17207900.6
(22) Date de dépôt: 18.12.2017
(51) Int. Cl.: F25D 25/02, F25D 29/00, G01K 1/02

(54) **SYSTÈME DE MESURE DE TEMPÉRATURE POUR UN APPAREIL RÉFRIGÉRATEUR**
TEMPERATURMESSSYSTEM FÜR EINEN KÜHLSSCHRANK
TEMPERATURE MEASUREMENT SYSTEM FOR A REFRIGERATOR

(30) Priorité: 23.12.2016 FR 1663294
(43) Date de publication de la demande: 27.06.2018
(73) Titulaire: Groupe Brandt, 92500 Rueil-Malmaison (FR)
(72) Inventeur: OUDART, Pascal, 45240 LA FERTE SAINT AUBIN (FR)
(74) Mandataire: Santarelli

(56) Documents cités:
- EP-A1- 2 392 902
- EP-A2- 2 574 871
- EP-A2- 2 840 338
- JP-A- 2001 263 896
- JP-A- 2002 039 660

## Description

La présente invention concerne un système de mesure de température pour un appareil réfrigérateur.

L'invention concerne également un appareil réfrigérateur comportant un système de mesure de température.

Un appareil réfrigérateur comporte une cavité ou enceinte de réfrigération où des aliments sont stockés pour leur conservation.

Chaque aliment a des conditions de température optimales pour une conservation optimale, certains aliments devant être maintenus à des températures moins élevées que d'autres pour une conservation optimale.

Classiquement, une température est établie, en général par un utilisateur, dans la cavité de réfrigération. L'appareil réfrigérateur est muni d'une sonde de température et de moyens de régulation pour maintenir la cavité de réfrigération à la température établie. Parfois, lorsque l'appareil réfrigérateur a un compartiment, tel qu'un compartiment refroidisseur, une sonde supplémentaire est installée dans le compartiment.

Néanmoins, dans l'enceinte de réfrigération, la température n'est pas homogène mais présente des valeurs différentes à des localisations différentes.

La température pour chaque zone de la cavité de réfrigération peut être estimée par les fabricants d'appareils réfrigérateurs à partir d'une température établie dans la cavité de réfrigération.

Ainsi, afin d'aider les utilisateurs à conserver de manière optimale les aliments stockés dans un appareil réfrigérateur, les fabricants fournissent avec les appareils réfrigérateurs, une notice indiquant la localisation optimale pour stocker chaque type d'aliment dans la cavité ou enceinte de réfrigération.

Néanmoins, les températures estimées pour des zones différentes de la cavité de réfrigération peuvent s'éloigner des températures réelles, du fait par exemple de l'écart existant entre les caractéristiques des différents appareils réfrigérateurs dû à leur fabrication, et/ou de la variation des caractéristiques de l'appareil réfrigérateur pendant sa vie, ces variations étant notamment liées aux conditions d'usage et d'entretien de l'appareil réfrigérateur.

Des systèmes de mesure de température pour un appareil réfrigérateur sont par exemple divulgués dans les documents de l'état de la technique antérieure JP2002039660 A, EP2574871 A2, JP2001263896 A, EP2392902 A1 et EP2840338 A2.

La présente invention a pour but de proposer un système de mesure de température permettant d'obtenir la température dans des zones différentes d'une cavité de réfrigération de manière fiable.

A cet effet, l'invention vise selon un premier aspect, un système de mesure de température pour un appareil réfrigérateur.

Selon l'invention, le système de mesure de température comporte plusieurs dispositifs de mesure de température et une unité de traitement globale recevant des mesures prises par les dispositifs de mesure de température, chaque dispositif de mesure de température comportant plusieurs capteurs de température montés sur une carte électronique et étant disposés entre une première extrémité et une seconde extrémité du dispositif de mesure de température, les premières extrémités des dispositifs de mesure de température étant reliées à ladite unité de traitement globale au moyen d'une première ligne d'un bus de communication et les secondes extrémités des dispositifs de mesure de température étant reliées à l'unité de traitement globale au moyen d'une seconde ligne du bus de communication.

Ainsi, dans chaque dispositif de mesure de température, les capteurs de température, sont disposés entre les extrémités du dispositif de mesure de température, les extrémités du dispositif de mesure de température étant reliés à l'unité de traitement globale via le bus de communication.

Autrement dit, les dispositifs de mesure de température regroupent plusieurs capteurs de température et sont reliés à l'unité de traitement globale via le bus de communication. Grâce à la structure du système de mesure de température, le système de mesure de température peut comporter de nombreux capteurs de température sans pour autant utiliser davantage de fils électriques supplémentaires.

En outre, grâce à la structure du système de température, des dispositifs de mesure de température peuvent être répartis dans l'appareil réfrigérateur de sorte à mesurer en temps réel les valeurs de la température à des localisations différentes.

La connaissance de la température réelle dans différentes zones de l'appareil réfrigérateur est utile pour un utilisateur cherchant à optimiser la conservation des aliments.

Selon l'invention, chaque dispositif de mesure de température comporte en outre une unité de traitement locale configurée pour le traitement des mesures prises par lesdits capteurs de température dudit dispositif de mesure de température.

Les mesures prises par les capteurs d'un dispositif de mesure de température sont ainsi traitées localement par l'unité de traitement locale du dispositif de mesure de température correspondant.

Ainsi, l'unité de traitement locale récupère les mesures des capteurs de température appartenant au dispositif de mesure de température.

Par exemple, chaque dispositif de mesure de température est configuré en outre pour transmettre à l'unité de traitement globale des informations représentatives desdites mesures de température prises par lesdits capteurs de température.

Ainsi, l'unité de traitement locale, après avoir récupéré les mesures de température des capteurs de température, les convertit en données numériques et les conditionne pour la transmission à l'unité de traitement globale via le bus de communication.

Selon une caractéristique, les dispositifs de mesure de température sont alimentés en électricité et transmettent les mesures prises par lesdits capteurs de température via ledit bus de communication

Le partage du bus de communication pour la transmission des données concernant les mesures de température et pour l'alimentation électrique des dispositifs de mesure de température, permet de réduire le nombre de fils électriques utilisés dans le système de mesure de température.

Selon une caractéristique, chaque dispositif de mesure de température a un numéro d'identification associé.

L'unité de traitement globale peut ainsi identifier chaque dispositif de mesure de température, pouvant associer des mesures de température reçues avec le dispositif de mesure de température de provenance.

Ainsi, si l'unité de gestion globale connaît l'emplacement d'un dispositif de mesure de température et des capteurs de température lui appartenant dans l'appareil réfrigérateur, elle peut associer les mesures provenant du dispositif de mesure de température à des emplacements dans l'appareil réfrigérateur.

Selon une caractéristique, chaque dispositif de mesure de température est configuré pour surveiller l'état du bus de communication, de sorte à identifier si le bus de communication est libre ou occupé.

En surveillant l'état du bus, le dispositif de mesure de température identifie si le bus est libre, c'est-à-dire si aucun dispositif de mesure de température n'émet d'informations, ou si le bus est occupé, c'est-à-dire, si un autre dispositif de mesure de température émet des mesures de température. Ainsi, l'unité de traitement locale identifie des moments auxquels elle peut procéder à la transmission des mesures de température prises par les capteurs de température. Dans le cas où l'unité de traitement locale constate que le bus est occupé, elle attend que le bus soit libre pour transmettre, à son tour, les mesures de température prises.

Selon une caractéristique, chaque dispositif de mesure de température vérifie la tension sur le bus de communication, le bus de communication étant libre lorsque la tension est constante pendant une période de temps prédéterminée.

Au contraire, le bus de communication est occupé lorsque la tension sur le bus de communication varie. En effet, lorsqu'un dispositif de mesure de température émet des informations, la tension sur le bus de communication varie.

Selon une caractéristique, chaque dispositif de mesure de température est configuré en outre pour comparer lesdites informations représentatives des mesures de température émises par lui-même avec les informations présentes sur le bus de communication.

Ainsi, le dispositif de mesure de température peut comparer les informations qu'il émet avec les informations qu'il écoute sur le bus de communication afin de détecter s'il y a une collision avec un autre dispositif de mesure de température, c'est-à-dire si un autre dispositif de mesure de température émet des informations en même temps.

Dans une telle situation, le dispositif de mesure de température arrête l'émission des informations et attend que le bus de communication soit libre pour recommencer l'émission des informations.

Selon une caractéristique, chaque dispositif de mesure de température comporte des moyens de stockage d'énergie.

Les moyens de stockage d'énergie représentent un réservoir d'énergie qui peut être utilisé lorsqu'il est nécessaire, par exemple pour l'alimentation du dispositif.

La présente invention vise selon un deuxième aspect, un appareil réfrigérateur comportant un système de température conforme à l'invention.

Selon une caractéristique, l'appareil réfrigérateur comporte une enceinte de réfrigération, lesdits dispositifs de mesure de température étant fixés respectivement à des emplacements prédéterminés de l'enceinte de réfrigération.

Ainsi, les dispositifs de mesure étant positionnés à des emplacements prédéterminés, les mesures de température récupérées par l'unité de traitement globale pour chaque dispositif de mesure sont associées à l'emplacement prédéterminé du dispositif de mesure de température.

Plus précisément, les capteurs de température, ayant une position fixe dans le dispositif de mesure de température, la mesure prise par chaque capteur de température peut être associée à une localisation ou point géographique de l'enceinte de réfrigération.

Par exemple, l'appareil réfrigérateur comporte plusieurs clayettes disposées dans l'enceinte de réfrigération, les dispositifs de mesure de température étant fixés respectivement sur lesdites clayettes.

L'appareil de réfrigération présente des caractéristiques et avantages analogues à ceux décrits précédemment en relation avec le système de mesure de température.

D'autres particularités et avantages de l'invention apparaîtront encore dans la description ci-après.

Aux dessins annexés, donnés à titre d'exemples non limitatifs :
- la figure 1 est un schéma représentant un appareil réfrigérateur selon un mode de réalisation de l'invention ;
- la figure 2 illustre schématiquement un système de mesure de température selon un mode de réalisation ;
- la figure 3 illustre une vue de côté d'un dispositif de mesure de température selon un mode de réalisation ;
- la figure 4 est un schéma des unités de traitement d'un système de mesure de température selon un mode de réalisation ; et
- la figure 5 représente la tension sur le bus de communication du système de mesure de température de la figure 2.

La présente invention trouve son application dans un appareil réfrigérateur comportant une enceinte de réfrigération.

Elle s'applique également à tout appareil électroménager comportant une enceinte dans laquelle la mesure de la température est utile pour un utilisateur, tel qu'un appareil de congélation.

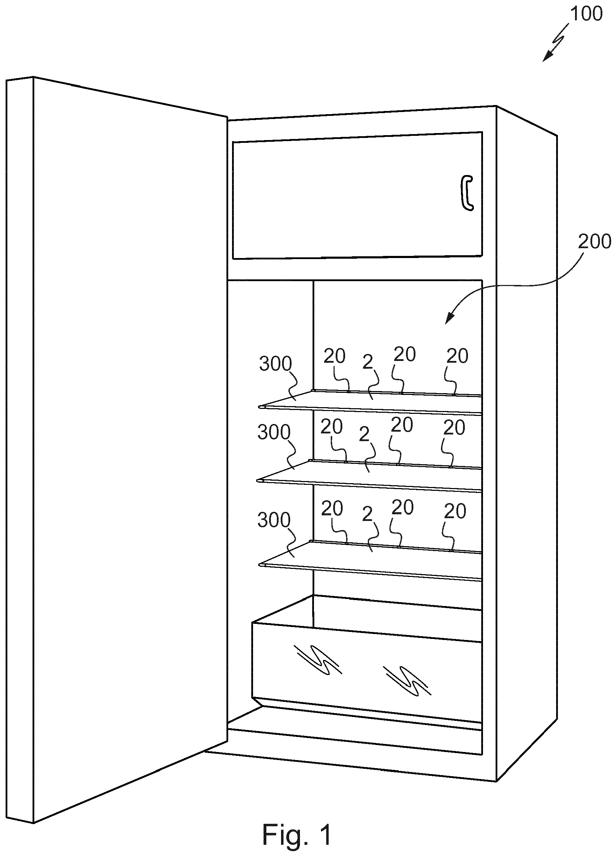

La **figure 1** illustre un appareil réfrigérateur 100 comportant une enceinte ou cavité de réfrigération 200 dans laquelle sont disposées des étagères ou clayettes 300 destinées à recevoir des aliments à stocker dans l'appareil réfrigérateur 100.

Dans le mode de réalisation illustré, l'appareil réfrigérateur 100 comporte trois clayettes 300. Bien entendu, le nombre de clayettes peut être différent.

Dans un mode de réalisation, les clayettes 300 sont amovibles.

L'appareil réfrigérateur 100 comporte un système de mesure de température 1 dont seulement une partie est visible sur la figure 1.

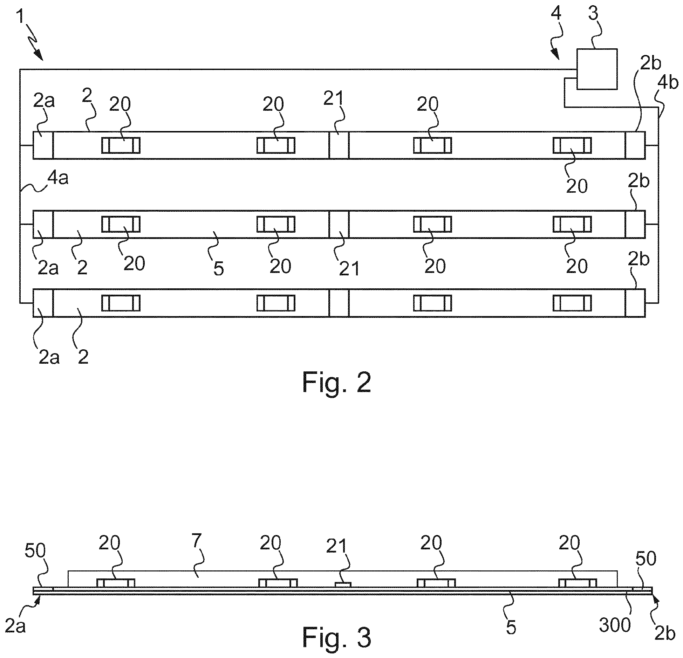

Le système de mesure de température 1 est illustré sur la **figure 2****.**

Le système de mesure de température 1 comporte plusieurs dispositifs de mesure de température 2 reliés au moyen d'un bus de communication 4 à une unité de traitement globale 3.

L'unité de traitement globale 3 peut faire partie des circuits électroniques (non visibles sur les figures) dédiés à la gestion du fonctionnement de l'appareil réfrigérateur 100.

Chaque dispositif de mesure de température 2 est situé à un emplacement différent de la cavité de réfrigération 200 de l'appareil réfrigérateur 100.

Ainsi, la température est mesurée à des emplacements différents de la cavité de réfrigération 200.

Dans le mode de réalisation décrit, le système de mesure de température 1 comporte trois dispositifs de mesure de température 2. Bien entendu, le nombre de dispositifs de mesure de température peut être différent.

Dans le mode de réalisation décrit et illustré sur la figure 1, chaque dispositif de mesure de température 2 est fixé sur une clayette 300, en particulier sur un bord arrière de la clayette 300 fixée sur une paroi de fond de la cavité de réfrigération 200.

Bien entendu, dans d'autres modes de réalisation, les dispositifs de mesure de température 2 peuvent être disposés à des emplacements différents. Par exemple, les dispositifs de mesure de température peuvent être fixés sur des parois formant la cavité de réfrigération 200 ou sur la porte de l'appareil réfrigérateur 1.

Le dispositif de mesure de température 2 comporte plusieurs capteurs de température 20 montés sur une carte électronique 5 ou PCB (de l'anglais « *Printed Circuit Board* »). Les capteurs de température 20 sont alignés les uns par rapport aux autres.

La carte électronique 5 présente une forme de barette. Une carte électronique 5 en forme de barrette est avantageuse car elle permet une fixation simple du dispositif de mesure de température 2 dans la cavité de réfrigération 200 sans être encombrante.

Bien entendu, d'autres formes de carte électronique sont possibles.

Dans un exemple, les capteurs de température 20 sont des thermistances de type CTN.

Bien entendu, d'autres types de capteurs de température peuvent être utilisés.

Dans le mode de réalisation décrit, le système de mesure de température 1 comporte des dispositifs de mesure de température 2 identiques.

Néanmoins, dans d'autres modes de réalisation, les dispositifs de mesure de température peuvent être différents, par exemple pouvant comporter un nombre de capteurs différents, ou de capteurs de types différents, ou des cartes électroniques ayant des formes ou des tailles différentes

Dans le mode de réalisation décrit, les capteurs de température 20 sont disposés alignés entre eux entre une première extrémité 2a du dispositif de mesure de température 2 et une seconde extrémité 2b du dispositif de mesure de température 2.

La première extrémité 2a et la seconde extrémité 2b du dispositif de mesure de température 2 correspondent respectivement à des extrémités de la carte électronique 5.

Les extrémités de la carte électronique 5 comportent respectivement des zones de contact électrique 50 (visibles sur la figure 3). Dans un mode de réalisation, les zones de contact électrique 50 comportent respectivement une couche de contact, telle qu'une couche de cuivre non vernie. Une couche de protection, telle qu'un couche d'or, est disposée sur chaque couche de contact.

Les premières extrémités 2a des dispositifs de mesure de température 2 sont reliées à une première ligne 4a du bus de communication 4, le bus de communication 4 reliant les dispositifs de mesure de température 2 et l'unité de traitement globale 3.

Ainsi, les premières extrémités 2a des dispositifs de mesure de température 2 sont reliées à l'unité de traitement globale 3

Les secondes extrémités 2b des dispositifs de mesure de température 2 sont reliées à une seconde ligne 4b du bus de communication 4.

Autrement dit, les secondes extrémités 2b des dispositifs de mesure de température 2 sont reliées à l'unité de traitement globale 3 au moyen d'une seconde ligne 4b du bus de communication 4.

En particulier, les lignes 4a, 4b du bus de communication 4 sont en contact avec les zones de contact 50 des cartes électroniques 5 des dispositifs de mesure de température 2.

Chaque dispositif de mesure de température 2 comporte en outre une unité de traitement locale 21 configurée pour traiter localement les mesures prises par les capteurs de température 20 du dispositif de mesure de température 2 correspondant.

En particulier, l'unité de traitement locale 21 récupère les mesures de température prises par les capteurs de température 20 du dispositif de mesure de température 2, et met en œuvre la conversion analogique/numérique des mesures afin de pouvoir les transmettre à l'unité de traitement globale 3 au moyen du bus de communication 4.

On notera que chaque capteur de température 20 est électriquement relié à l'unité de traitement locale 21 et que l'unité de commande locale 21 est reliée électriquement aux première et seconde lignes 4a, 4b du bus de communication 4 via les première et seconde extrémités 2a 2b respectivement.

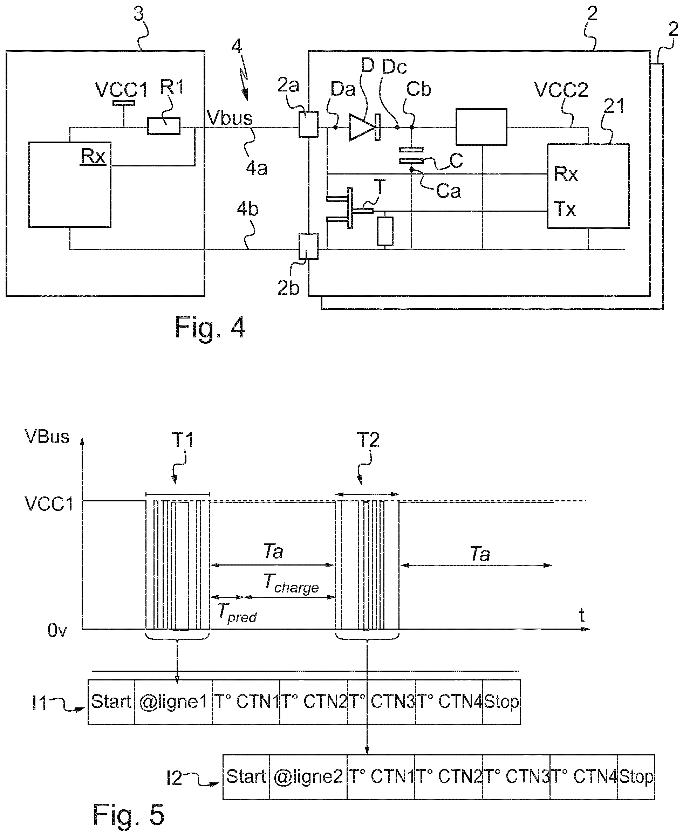

Le fonctionnement de l'unité de traitement locale 21 sera décrit en référence à la figure 4.

Dans le mode de réalisation illustré, l'unité de traitement locale 21 est disposée dans un point milieu du dispositif de mesure de température 2.

Grâce à la structure des dispositifs de mesure de température 2, les mesures de température prises par les capteurs de température 20 d'un dispositif de mesure de température 2 sont traitées par l'unité de traitement locale 21 de ce même dispositif de mesure de température, le montage d'un système de mesure de température 1 étant simple.

En outre, bien que des capteurs de température 20 supplémentaires, par rapport aux systèmes de mesure de température de l'art antérieur, soient installés dans une cavité de réfrigération 200, des fils électriques supplémentaires ne sont pas nécessaires.

Par ailleurs, des dispositifs de mesure de température peuvent être ajoutés sans pour autant devoir ajouter des fils électriques supplémentaires au système de mesure de température

La **figure 3** représente une vue de côté d'un dispositif de mesure de température 2 du système de mesure de température 1 représenté sur la figure 2.

Les capteurs de température 20 ainsi que l'unité de traitement locale 21 sont montés sur la carte électronique 5.

La carte électronique est fixée sur la clayette 300, par exemple par collage.

Dans un mode de réalisation, un enrobage 7 est positionné sur le capteur de température 20 et l'unité de traitement locale 21 afin de protéger mécaniquement les composants électroniques du dispositif de mesure de température 2.

Les propriétés thermiques de cet enrobage 7 n'ont pas d'influence sur la mesure de la température au sein de l'enceinte de réfrigération 200.

La **figure 4** représente une unité de traitement globale 3 reliée à un dispositif de mesure de température 2 au moyen d'un bus de communication 4.

Bien entendu, cette représentation d'une partie du système de mesure de température 1 est schématique, d'autres dispositifs de mesure de température 2 étant également reliés à l'unité de traitement globale 3 au moyen du même bus de communication 4.

Une première ligne 4a du bus de communication 4 est reliée à la première extrémité 2a du dispositif de mesure de température 2, et une seconde ligne 4b est reliée à une seconde extrémité 2b du dispositif de mesure de température 2.

Le bus de communication 4 alimente électriquement le dispositif de mesure de température 2 et sert à véhiculer les mesures prises par les capteurs de température 20 vers l'interface de traitement globale 3.

Le dispositif de mesure de température 2 est alimenté par l'unité de traitement globale 3. L'unité de traitement globale 3 comporte une alimentation VCC1. La première ligne 4a du bus de communication 4 relie le dispositif de mesure de température 2, en particulier la première extrémité 2a à l'alimentation VCC1.

La seconde ligne 4b du bus de communication 4 est maintenue à un potentiel de référence, par exemple de 0 volt.

Chaque dispositif de mesure de température 2 comporte des moyens de mémorisation (non visibles sur la figure) permettant le stockage des mesures de température récupérées des capteurs de température 20 du dispositif de mesure de température 2.

Le dispositif de mesure de température 2, et en particulier, l'unité de traitement locale 21, est configurée pour le traitement des mesures prises par les capteurs de température 20 du dispositif de mesure de température 2.

L'unité de traitement locale 21 transmet à l'unité de traitement globale 3 des informations représentatives des mesures de température prises par les capteurs de température 20.

Ainsi, une fois les mesures de température récupérées, elles sont converties en données numériques afin d'être transmises à travers le bus de communication 4. Ainsi, les mesures analogiques prises par les capteurs de température sont converties en une trame d'informations binaires, cette trame étant transmise à l'unité de traitement globale 3.

Pour la mise en œuvre de la transmission des mesures de température, l'unité de traitement locale 21 comporte une sortie TX sur laquelle des informations binaires sont émises.

Cette sortie TX est une sortie série à travers laquelle une trame d'informations binaires représentative de mesures de température prises par les capteurs de température 20 est émise.

La trame d'informations binaires transmise par un dispositif de mesure de température 2 comporte en outre un numéro d'identification associé au dispositif de mesure de température 2 correspondant.

Ainsi, l'unité de traitement globale 3 peut reconnaitre le dispositif de mesure de température 2 émettant des mesures de température et peut reconstituer une matrice de température dans laquelle chaque point correspond à la mesure d'un capteur de température 20.

Le dispositif de mesure de température comporte un transistor T relié entre la première extrémité 2a et la seconde extrémité 2b, c'est-à-dire entre la première ligne 4a et la seconde ligne 4b du bus de communication 4.

A titre d'exemple, nullement limitatif, le transistor T peut être un transistor bipolaire de type NPN ou un transistor MOS à canal N.

La grille ou la base du transistor T est connectée à la sortie série TX de l'unité de traitement locale 21.

Lorsqu'un "1" logique est présent à la sortie série TX de l'unité de traitement locale 21, le transistor T est en état de conduction. Ainsi, le niveau électrique *Vbus* de la première ligne 4a du bus de communication 4 chute, étant ainsi inférieur à la tension d'alimentation VCC1. Cette chute est possible grâce à la présence de la résistance R1 dans l'unité de traitement globale 3, entre l'alimentation VCC1 et la première ligne du bus de communication 4.

Au contraire, lorsqu'un "0" logique est présent sur la sortie série TX de l'unité de traitement locale 21, la première ligne 4a du bus de communication 4 est maintenue au niveau de l'alimentation VCC1.

Afin que chaque dispositif de mesure de température 2 émette ses informations représentatives des mesures de température, sans que des collisions de données se produisent, chaque unité de traitement locale 21 surveille l'état du bus de communication 4 de sorte à identifier si le bus de communication 4 est libre ou occupé.

Dans un mode de réalisation, l'unité de traitement locale 21 surveille l'état du bus de communication 4 par une vérification de la tension sur le bus de communication 4.

En particulier, l'unité de traitement locale 21 vérifie la valeur de la tension à une entrée série RX. Si la tension sur le bus de communication 4 reste constante pendant une période de temps prédéterminée, le bus de communication 4 est libre, un dispositif de mesure de température 2 pouvant ainsi émettre ses mesures de température.

L'émission des données par un dispositif de mesure de température 2 sera décrite en référence à la figure 5.

Chaque dispositif de mesure de température 2 comporte en outre des moyens de stockage d'énergie.

Dans le mode de réalisation décrit, les moyens de stockage d'énergie comportent un condensateur C. Le condensateur C est relié au second terminal 2b du dispositif de mesure de température 2 par une première extrémité Ca. Une seconde extrémité Cb du condensateur C est reliée à la cathode Dc d'une diode D. L'anode Da de la diode D est reliée au premier terminal 2a du dispositif de mesure de température 2.

Le dispositif de mesure de température 2 comporte en outre des moyens de régulation de la tension pour générer une tension d'alimentation VCC2 de l'unité de traitement local 21, cette tension d'alimentation étant générée à partir de l'alimentation VCC1 en provenance de l'unité de traitement globale 3.

La diode D a pour fonction de déconnecter le dispositif de mesure de température 2, en particulier la première extrémité 2a, du bus de communication 4 lorsque le bus de communication 4 souffre d'une chute de tension. Cette chute de tension se produit lorsque le dispositif de mesure de température 2 émet un « 1 » logique.

En effet, lorsque la tension *Vbus* dans le bus de communication 4 est inférieure au niveau VCC1, la diode D ne conduit pas et le condensateur C n'est pas relié au bus de communication 4. Dans ce cas, le dispositif de mesure de température 2 est alimenté par l'énergie stockée dans le condensateur C qui transfère de l'énergie stockée aux différents composants électroniques du dispositif de mesure de température 2.

Lorsque la tension *Vbus* du bus de communication 4 revient au niveau VCC1, la diode D est en état de conduction, le dispositif de mesure de température 2 étant à nouveau relié au bus de communication 4, et le condensateur C est rechargé en énergie.

Ainsi, lorsqu'un dispositif de mesure de température 2 émet des données « 1 », l'alimentation des dispositifs de mesure de température 2 est mise en œuvre localement par les moyens de stockage d'énergie C.

Le dispositif de mesure de température 2 est en outre configuré pour comparer les informations représentatives des mesures de température qu'il émet (sur la sortie série TX) avec les informations présentes sur le bus de communication 4.

Dans ce mode de réalisation, l'unité de traitement locale 21 écoute via son entrée série RX, ce qu'elle émet sur la sortie série TX.

Dans un mode de réalisation, l'unité de traitement locale 21 compare les informations transmises via la sortie série TX avec les informations reçues via l'entrée série RX.

Ainsi, il est possible de détecter une éventuelle collision des données émises par un dispositif de mesure de température 2 avec les données émises par un autre dispositif de mesure de température 2 en même temps.

Si le dispositif de mesure de température 2 détecte une collision, c'est-à-dire que les données qu'il émet ne correspondent pas aux données qu'il reçoit, le dispositif de mesure de température 2 attend une période de temps ou période d'attente Ta (décrit en référence à la figure 5) avant de réémettre sa trame d'information comportant les mesures de température.

L'émission des données correspondant au dispositif de mesure de température 2 est représentée sur la **figure 5****.**

Cette figure représente la tension *Vbus* sur le bus de communication 4 en fonction du temps *t*.

Pendant une première période de temps ou période d'émission T1, un premier dispositif de mesure de température 2 transmet des informations représentatives de mesures de température prises.

La trame d'informations I1 correspondante à cette émission est représentée sur la figure 5. Dans cette trame d'informations le numéro d'identification ou adresse du dispositif de mesure de température 2 est inséré, suivi des informations binaires représentatives des mesures prises par chacun des capteurs de température 20.

Lors d'une deuxième période de temps ou période d'émission T2, un deuxième dispositif de mesure de température 2 transmet une deuxième trame d'informations I2. De manière similaire à la première trame d'informations I1, la deuxième trame d'informations I2 comprend le numéro d'identification ou l'adresse correspondante et les mesures prises par les capteurs de température 20.

On notera qu'entre deux périodes d'émission T1, T2, une période d'attente Ta s'est écoulé.

La période d'attente Ta est composée d'une période de charge T_{charge} et d'une période de temps prédéterminée T_{pred} pendant laquelle la tension *Vbus* sur le bus de communication 4 reste constante.

La période de temps prédéterminée T_{pred}, ayant ici une valeur aléatoire, présente une valeur permettant de minimiser la probabilité que deux dispositifs de mesure de température 2 débutent l'émission de ces mesures de température en même temps une fois que le bus de communication 4 est libéré.

La période de charge T_{charge} est déterminée de sorte que sa valeur permette à la totalité des dispositifs de mesure de température 2 de recharger ses moyens de stockage d'énergie C. En même temps, la valeur de la période de charge T_{charge} présente une valeur maximale permettant que la totalité des dispositifs de mesure de température 2 émettent ses données dans un intervalle de temps acceptable pour pouvoir répéter régulièrement la récolte des données par l'unité de traitement globale 3 de sorte à tenir compte des variations de température dans l'appareil réfrigérateur 1.

On notera que dans le mode de réalisation décrit, les unités de traitement locales 21 ne sont pas au courant du nombre de dispositifs de mesure de température 2 dans le système de température 1.

Dans un autre mode de réalisation, les unités de traitement locales connaissent le nombre de dispositifs de mesure de température dans le système de mesure de température 1. Ainsi, elles peuvent émettre de façon consécutive selon l'ordre numérique des numéros d'identifiant ou adresse. En effet, l'unité de commande en écoutant les trames d'information émises par les dispositifs de mesure de température peut savoir le moment auquel il doit émettre sa trame d'information.

## Revendications

1. Système de mesure de température pour un appareil réfrigérateur **caractérisé en ce qu'**il comporte plusieurs dispositifs de mesure de température (2) et une unité de traitement globale (3) recevant des mesures prises par lesdits dispositifs de mesure de température (2), chaque dispositif de mesure de température (2) comportant plusieurs capteurs de température (20) et une unité de traitement locale (21) configurée pour le traitement des mesures prises par lesdits capteurs de température (20), lesdits capteurs de température et ladite unité de traitement locale étant montés sur une même carte électronique (5) et étant disposés entre une première extrémité (2a) et une seconde extrémité (2b) dudit dispositif de mesure de température (2), les premières extrémités (2a) des dispositifs de mesure de température (2) étant reliées à ladite unité de traitement globale (3) au moyen d'une première ligne (4a) d'un bus de communication (4) et les secondes extrémités (2a) des dispositifs de mesure de température (2) étant reliées à ladite unité de traitement globale (3) au moyen d'une seconde ligne (4b) dudit bus de communication (4).

2. Système de mesure de température conforme à la revendication 1, **caractérisé en ce que** chaque dispositif de mesure de température (2) est configuré en outre pour transmettre à ladite unité de traitement globale (3) des informations représentatives desdites mesures de température prises par lesdits capteurs de température (20).

3. Système de mesure de température conforme à l'une des revendications 1 à 2, **caractérisé en ce que** lesdits dispositifs de mesure de température sont alimentés en électricité et transmettent les mesures prises par lesdits capteurs de température via ledit bus de communication.

4. Système de mesure de température conforme à l'une des revendications 1 à 3, **caractérisé en ce que** chaque dispositif de mesure de température a un numéro d'identification associé.

5. Système de mesure de température conforme à l'une des revendications 2 à 4, **caractérisé en ce que** chaque dispositif de mesure de température (2) est configuré pour surveiller l'état dudit bus de communication (4), de sorte à identifier si ledit bus de communication (4) est libre ou occupé.

6. Système de mesure de température conforme à la revendication 5, **caractérisé en ce que** chaque dispositif de mesure de température (2) vérifie la tension sur le bus de communication (4), le bus de communication (4) étant libre lorsque la tension est constante pendant une période de temps prédéterminée (Ta).

7. Système de mesure de température conforme à la revendication 6, **caractérisé en ce que** chaque dispositif de mesure de température (2) est en outre configuré pour comparer lesdites informations représentatives des mesures de température émises par elle-même avec les informations présentes sur ledit bus de communication (4).

8. Système de mesure de température conforme à l'une des revendications 1 à 7, **caractérisé en ce que** chaque dispositif de mesure de température (2) comporte des moyens de stockage d'énergie (C).

9. Appareil réfrigérateur **caractérisé en ce qu'**il comporte un système de mesure de température (1) conforme à l'une des revendications 1 à 8.

10. Appareil réfrigérateur conforme à la revendication 9, **caractérisé en ce qu'**il comporte une enceinte de réfrigération (200), lesdits dispositifs de mesure de température (2) étant fixés respectivement à des emplacements prédéterminés de l'enceinte de réfrigération (200).

11. Appareil réfrigérateur conforme à l'une des revendications 9 ou 10, **caractérisé en ce qu'**il comporte plusieurs clayettes (300) disposées dans ladite enceinte de réfrigération (200), lesdits dispositifs de mesure de température (2) étant fixés respectivement sur lesdites clayettes (300).

## Patentansprüche

1. Temperaturmesssystem für ein Kühlgerät, **dadurch gekennzeichnet, dass** es mehrere Temperaturmessvorrichtungen (2) und eine globale Verarbeitungseinheit (3), welche über die Temperaturmessvorrichtungen (2) aufgenommene Messungen empfängt, wobei jede Temperaturmessvorrichtung (2) mehrere Temperatursensoren (20) und eine lokale Verarbeitungseinheit (21) enthält, die zum Verarbeiten der über die Temperatursensoren (20) aufgenommenen Messungen ausgelegt ist, wobei die Temperatursensoren und die lokale Verarbeitungseinheit an derselben elektronischen Karte (5) angebracht und zwischen einem ersten Ende (2a) und einem zweiten Ende (2b) der Temperaturmessvorrichtung (2) angeordnet sind, wobei die ersten Enden (2a) der Temperaturmessvorrichtungen (2) mittels einer ersten Leitung (4a) eines Kommunikationsbusses (4) mit der globalen Verarbeitungseinheit (3) verbunden sind und die zweiten Enden (2a) der Temperaturmessvorrichtungen (2) mittels einer zweiten Leitung (4b) des Kommunikationsbusses (4) mit der globalen Verarbeitungseinheit (3) verbunden sind.

2. Temperaturmesssystem nach Anspruch 1, **dadurch gekennzeichnet, dass** jede Temperaturmessvorrichtung (2) ferner dazu ausgelegt ist, an die globale Verarbeitungseinheit (3) Informationen zu übertragen, die für die Temperaturmessungen repräsentativ sind, die über die Temperatursensoren (20) aufgenommen werden.

3. Temperaturmesssystem nach einem der Ansprüche 1 bis 2, **dadurch gekennzeichnet, dass** die Temperaturmessvorrichtungen mit Strom versorgt werden und die über die Temperatursensoren aufgenommenen Messungen über den Kommunikationsbus übertragen.

4. Temperaturmesssystem nach einem der Ansprüche 1 bis 3, **dadurch gekennzeichnet, dass** jede Temperaturmessvorrichtung eine zugeordnete Identifikationsnummer hat.

5. Temperaturmesssystem nach einem der Ansprüche 2 bis 4, **dadurch gekennzeichnet, dass** jede Temperaturmessvorrichtung (2) dazu ausgelegt ist, den Zustand des Kommunikationsbusses (4) zu überwachen, so dass sie erkennt, ob der Kommunikationsbus (4) frei oder besetzt ist.

6. Temperaturmesssystem nach Anspruch 5, **dadurch gekennzeichnet, dass** jede Temperaturmessvorrichtung (2) die Spannung am Kommunikationsbus (4) überprüft, wobei der Kommunikationsbus (4) dann frei ist, wenn die Spannung für eine vorbestimmte Zeitdauer (Ta) konstant ist.

7. Temperaturmesssystem nach Anspruch 6, **dadurch gekennzeichnet, dass** jede Temperaturmessvorrichtung (2) ferner dazu ausgelegt ist, die Informationen, die repräsentativ sind für die über sie selbst abgegebenen Temperaturmessungen, mit am Kommunikationsbus (4) vorhandenen Informationen zu vergleichen.

8. Temperaturmesssystem nach einem der Ansprüche 1 bis 7, **dadurch gekennzeichnet, dass** jede Temperaturmessvorrichtung (2) Energiespeichermittel (C) enthält.

9. Kühlgerät, **dadurch gekennzeichnet, dass** es ein Temperaturmesssystem (1) nach einem der Ansprüche 1 bis 8 enthält.

10. Kühlgerät nach Anspruch 9, **dadurch gekennzeichnet, dass** es ein Kühlgehäuse (200) enthält, wobei die Temperaturmessvorrichtungen (2) an jeweiligen vorbestimmten Stellen des Kühlgehäuses (200) befestigt sind.

11. Kühlgerät nach einem der Ansprüche 9 oder 10, **dadurch gekennzeichnet, dass** es mehrere Ablagen (300) enthält, die in dem Kühlgehäuse (200) angeordnet sind, wobei die Temperaturmessvorrichtungen (2) an den jeweiligen Ablagen (300) befestigt sind.

## Claims

1. System for measuring the temperature of a refrigerating apparatus, **characterised in that** said system comprises a plurality of temperature measuring devices (2) and an overall processing unit (3) which receives measurements taken by said temperature measuring devices (2), each temperature measuring device (2) comprising a plurality of temperature sensors (20) and a local processing unit (21) configured to process measurements taken by said temperature sensors (20), said temperature sensors and said local processing unit being mounted on the same electronic board (5) and being arranged between a first end (2a) and a second end (2b) of said temperature measuring device (2), the first ends (2a) of the temperature measuring devices (2) being connected to said overall processing unit (3) by means of a first line (4a) of a communication bus (4) and the second ends (2a) of the temperature measuring devices (2) being connected to said overall processing unit (3) by means of a second line (4b) of said communication bus (4).

2. Temperature measuring system according to claim 1, **characterised in that** each temperature measuring device (2) is further configured to transmit, to said overall processing unit (3), information that is representative of said temperature measurements taken by said temperature sensors (20).

3. Temperature measuring system according to either claim 1 or claim 2, **characterised in that** said temperature measuring devices are supplied with electricity and transmit the measurements taken by said temperature sensors via said communication bus.

4. Temperature measuring system according to any of claims 1 to 3, **characterised in that** each temperature measuring device has an associated identification number.

5. Temperature measuring system according to any of claims 2 to 4, **characterised in that** each temperature measuring device (2) is configured to monitor the state of said communication bus (4) so as to identify whether said communication bus (4) is free or busy.

6. Temperature measuring system according to claim 5, **characterised in that** each temperature measuring device (2) checks the voltage on the communication bus (4), the communication bus (4) being free when the voltage is constant for a predetermined period of time (Ta).

7. Temperature measuring system according to claim 6, **characterised in that** each temperature measuring device (2) is further configured to compare, with the information present on said communication bus (4), said information that is representative of the temperature measurements and is transmitted by said device itself.

8. Temperature measuring system according to any of claims 1 to 7, **characterised in that** each temperature measuring device (2) comprises energy storage means (C).

9. Refrigerating apparatus, **characterised in that** it comprises a temperature measuring system (1) according to any of claims 1 to 8.

10. Refrigerating apparatus according to claim 9, **characterised in that** it comprises a refrigerating chamber (200), said temperature measuring devices (2) being respectively attached at predetermined locations of the refrigerating chamber (200).

11. Refrigerating apparatus according to either claim 9 or claim 10, **characterised in that** it comprises a plurality of shelves (300) arranged in said refrigerating chamber (200), said temperature measuring devices (2) being respectively attached to said shelves (300).
